# EUROPEAN PATENT APPLICATION

(11) **EP 2 211 571 A1**
(43) Date of publication of application: **28.07.2010**
(21) Application number: 09290046.3
(22) Date of filing: 23.01.2009
(51) Int. Cl.: H04W 24/02

(54) **Automatic update of a neighbour relation table of a base station**

(71) Applicant: Alcatel Lucent, 75008 Paris (FR)
(72) Inventor: Ambrosy, Anton, 75233 Tiefenbronn (DE); Dötsch, Uwe, 74392 Freudental (DE)
(74) Representative: Richardt, Markus Albert

(57) **Abstract**

The present invention relates to automatic update of a neighbour relation table of a base station. In particular, the present invention relates to a method, a computer program product, and a user terminal for automatically updating a neighbour relation table of a base station, and to a base station and a radio communication system. The base station (2) broadcasts a broadcast message to user terminals (4) served by said base station (2). An instruction for switching user terminals in idle mode to a not idle mode is inserted into the broadcast message. User terminals in idle mode receiving said broadcast message from their serving base station are able to extract said instruction from the broadcast message. Hence, based on said instruction said user terminals switch from the idle mode to the not idle mode.

## Description

### Field of the invention

The present invention relates to automatic update of a neighbour relation table of a base station. In particular, the present invention relates to a method, a computer program product, and a user terminal for automatically updating a neighbour relation table of a base station, and to a base station and a radio communication system.

### Background and prior art

Cellular wireless data access systems typically consist of a set of base stations each with a certain number of cells and each cell having a transmitter and a receiver with one or multiple antenna elements. A user terminal is typically assigned to one base station by wireless connection to one cell thereof.

Conventional base stations provide for a self-configuration process. Such self-configuration process is defined as the process where newly deployed base stations are configured by automatic installation procedures to get the necessary basic configuration for system operation. Such process usually works in pre-operational state. Pre-operational state is understood as the state from when the base station is powered up and has backbone connectivity until its radio frequency transmitter is switched on.

Furthermore, conventional radio communication systems comprising at least one base station and at least one user terminal provide for a self-optimization process. Such self-optimization process is defined as the process where user terminal and base station measurements and performance measurements are used to auto-tune a radio communication network. In contrast to the self-configuration process of a base station the self-optimization process works in operational state. Operational state is understood as the state where the radio frequency interface is additionally switched on.

Such self-configuration and self-optimization processes can be found in different radio systems, as for example IEEE WiMAX (Institute of Electrical & Electronics Engineers Worldwide Interoperability for Microwave Access), 3GPP UMTS (3rd Generation Partnership Project Universal Mobile Telecommunications System), and 3GPP LTE (3rd Generation Partnership Project Long Term Evolution). User terminals in such radio systems support measurements, measurement reporting, and procedures, which can be used for self-configuration and self-optimization of the radio communication system or parts thereof.

An important function residing in conventional base stations is the automatic neighbour relation (ANR) function managing a neighbour relation table (NRT) of the base station. The ANR function can, for example, be used to self-configure a NRT for a new deployed base station. Neighbour cell relations are cell-to-cell relations and usually bidirectional. Located within ANR, a neighbour detection function finds new neighbouring cells, and adds them to the NRT. ANR also contains a neighbour removal function, which removes outdated neighbour relations.

In practice, the ANR function works as follows. A base station has an ANR function and at least one cell in which user terminals are located. As a part of the normal call procedure the base station instructs each user terminal in connected mode to perform measurements on neighbouring cells. The base station may use different policies for instructing the user terminals to do measurements, and when to report them to the base station. Then, the user terminal sends a measurement report regarding the neighbouring cells of the cell in which it is located. This report contains a physical cell identifier (PCI) of the neighbouring cells. When receiving the measurement report from a user terminal the base station may further instruct the user terminal by using the newly discovered PCI as parameter to read further data (e.g. E-UTRAN Cell Global identifier (ECGI)) of the related neighbouring cell from its broadcast channel. These data are again reported to the serving base station. The base station then decides to add this neighbour relation, wherein the PCI and ECGI may be used, for example, to update the neighbour relation table.

However, only user terminals in connected mode can support the ANR function because only these user terminals send event driven or periodically measurement reports containing PCIs of all detected neighbouring cells. Said user terminals in connected mode may send more measurement reports to their serving base station in case that a user terminal is located at the cell border of said serving base station and a handover to another network cell is required. However, if said serving base station is a new deployed base station whose NRT does still not contain enough information for initiating the handover, call drops may occur until new and enough entries are captured in the NRT. Furthermore, a user terminal in handover condition does not mandatory support the ANR function. In addition, the occurrence of call drops also depends on the service performed between a user terminal and its serving base station. That is, in case of high traffic between a user terminal and its serving base station (e.g. Voice over IP) there are not enough resources for performing the ANR function, which is used to fill the NRT of the serving base station. Consequently, a problem may arise that there are not enough user terminals within a cell of a new deployed base station supporting the ANR function. Therefore, filing and/or updating of the NRT of a new deployed base station may take a long time, in particular if user terminals served by said base station can not or do not support the ANR function. However, as long as the NRT of a base station does not contain all necessary data for initiating reliable handovers, call drops may occur.

It is therefore an object of the present invention to initiate more measurement reports of user terminals to their serving base station without consuming too much additional battery power of the affected user terminals.

This object and other objects are solved by the features of the independent claims. Preferred embodiments of the invention are described by the features of the dependent claims.

### Summary of the invention

An enhanced solution for automatically updating a neighbour relation table of a base station is provided. The base station broadcasts a broadcast message to user terminals served by said base station. Preferably, the broadcast message is broadcasted through a broadcast channel, which is read out by all user terminals within a cell of the base station, irrespective of their mode (e.g. idle or connected mode). According to the present invention an instruction for switching user terminals in idle mode to a not idle mode is inserted into the broadcast message. User terminals in idle mode receiving said broadcast message from their serving base station are able to extract said instruction from the broadcast message. Hence, based on said instruction said user terminals switch from the idle mode to the not idle mode.

In idle mode, a user terminal has no active connection to the network and selects autonomously a cell for receiving messages through a broadcast channel of the corresponding base station. This is usually done by reading out broadcast channels of several base stations which broadcast their broadcast messages periodically and selecting an appropriate cell. By inserting the switching instruction into such broadcast message which is broadcasted in any event and received by all user terminals, the present invention provides for a very simple and power saving solution for switching user terminals in idle mode to the not idle mode. The kind of broadcast channel which is read out by the user terminals depends on the used technology. Known broadcast channels are, for example, Broadcast Control Channel (BCCH), Common Control Channel (CCCH), and Cell Broadcast Channel (CBCH).

The switching from idle mode to not idle mode applies, for example, to user terminals powered on in a new deployed cell or to user terminals entering a new deployed cell, since such user terminals read the broadcast message from the new deployed serving base station obligatory. Otherwise, the user terminals would not know if it is allowed to camp on this cell or if a registration area, e.g. Routing Area (RA) in UMTS or Tracking Area (TA) in LTE, update is required for paging reasons. Camping of a user terminal on a cell means that said user terminal is in idle mode. Thus, by inserting the switching instruction into the broadcast message user terminals in idle mode receive the announcement that they are not allowed to camp on the respective cell but have to switch to a not idle mode.

According to an embodiment of the present invention a user terminal switched to the not idle mode performs measurements regarding neighbouring cells of the cell in which said user terminal is located. For example, a switched user terminal measures PCIs of neighbouring cells and their corresponding signal strengths. Even if the not idle mode is a kind of connected mode, in not idle mode a user terminal does not perform any data or voice communications but only performs measurements regarding neighbouring cells. Therefore, as such measurements are not performed frequently a user terminal in not idle mode does not consume much more battery power than a user terminal in idle mode.

According to a further embodiment of the present invention a user terminal switched to the not idle mode requests grant for uplink resources to its serving base station. The uplink resources are used by the respective user terminal to inform the serving base station about its not idle state and later on for the transmission of measurement reports regarding measurements of neighbouring cells. Preferably, the user terminal notifies the serving base station of its measurement report so that the base station is prepared when receiving the measurement report. Thus, instead of camping on a cell user terminals in idle mode are switched to not idle mode and used by their serving base station to acquire information regarding neighbouring cells and to transmit such information by means of measurement reports.

To request grant for uplink resources and to transmit the measurement reports to the respective base station conventional procedures can be used which are known to the skilled person. After receiving a grant for uplink resources a user terminal preferably indicates in the MAC (Media Access Control) header that the content of the data includes a measurement report. For example, a specific logical channel identity is used or one of reserved indices is defined.

An advantage of the proposed solution is that user terminals being in not idle mode instead of idle mode do not really consume much more of their battery power, since performing measurements regarding neighbouring cells and reporting these measurements does not consume much battery power. In particular, the measurements performed by affected user terminals are not permanent and do not occur in the range of milliseconds. For example, the frequency of measurements depends on the user terminal's motion speed. If the user terminal moves relatively slow through the cell only a few measurements are performed. If the user terminal moves relatively fast through the cell more measurements may be performed as long as the user terminal remains in the coverage area of the serving cell. However, such a fast moving user terminal usually leaves said cell shortly, so that the additional power consumption only lasts for a short time period. In any case, users of the switched user terminals will not remark the power consumption caused by the additional measurements according to the present invention.

Furthermore, if the battery charging level of a user terminal is low, such user terminal can be adapted not to perform such additional measurements. However, it should be noted that the more user terminals within a cell perform measurements regarding neighbouring cells the faster the neighbour relation table of the corresponding base station will be filled and/or updated.

According to a further embodiment of the present invention the neighbour relation table (NRT) of the base station is updated based on the measurement reports received from user terminals, which are switched from idle mode to not idle mode and are served by said base station. That is, user terminals in idle mode are switched to the not idle mode for automatic neighbour relation (ANR) measurement reasons and the transmitted measurement reports are used to trigger ANR measurements to fill and/or update the neighbour relation table of the base station.

Up to now only user terminals in connected mode have been used to support the ANR function of a base station. According to the present invention additional measurement reports are generated by switching user terminals in idle mode to not idle mode and instructing these switched user terminals to perform measurements regarding neighbouring cells and to report these measurements to their serving base station. Thus, user terminals in idle mode awake by the switching instruction and the measurements of affected (switched) user terminals are used to speed up the update of NRT entries.

In particular with respect to a new deployed base station the filling of the NRT is speed up a lot because in contrast to conventional procedures, where only user terminals in connected mode support the ANR function, user terminals in idle mode are switched to the not idle mode so that all user terminals within a cell are used to support the ANR function of the corresponding base station. This is achieved by forbidding camping in the cell in which the broadcast message including the switching instruction is broadcasted. Thus, more measurement reports are initiated. For example, this is beneficial for the avoidance of call drops when a handover is requested, since the NRT of a base station is filled and/or updated faster. The more entries the neighbour relation table has and the newer these entries are the more reliable a handover can be performed by the corresponding base station. Thus, according to the present invention a base station is prepared faster for initiating a handover to a neighbouring cell. In other words, according to the present invention a base station may acquire more data regarding neighbouring cells within the same time than conventionally. The resulting reduction of call drops in case of a handover enlarges the customer's satisfaction.

According to a further embodiment of the present invention a switched user terminal is released from the not idle mode after a predefined period. That is, camping of user terminals within a cell, e.g. a new deployed cell, is not allowed for a predefined period, e.g. one hour, one day, etc. For example, user terminals switched to the not idle mode based on the instruction inserted into the broadcast message are switched to a not barred mode after the predefined period. Thereby, power consumption of affected user terminals is further reduced. One possibility to instruct affected user terminals accordingly is to change the instruction within the broadcast message which is periodically decoded by the user terminals from not idle to not barred. Such change of the instruction is implementation specific and may be handled by a timer or may depend on the number of NRT entries. In case that the broadcast message includes the not barred instruction all user terminals which are powered on in the corresponding cell or which enter this cell are able to camp on this cell. Optionally a dedicated signaling is used to instruct user terminals to switch from the not idle mode to e.g. the not barred mode.

User terminals which leave a cell broadcasting the not idle instruction and enter a neighbouring cell where camping is allowed (not barred cell), are enabled to camp on the neighbouring cell by applying the already standardized procedures. In this case special handling or signaling is not required. The old serving base station can indicate such cell change because the provisioning of measurement reports of corresponding user terminals has been finished.

It should be noted that the switching of user terminals in idle mode to a not idle mode according to the present invention is also applicable in other fields then the automatic update of the neighbour relation table of a base station. However, even if used in other fields the present invention still solves the problem of initiating more measurement reports of user terminals to their serving base station without consuming too much additional battery power of the affected user terminals.

One field in which the activation of user terminals in idle mode is useful is, for example, the field of intra-cell measurements. According to the present invention user terminals in idle mode are switched to the not idle mode based on the switching instruction broadcasted by their serving base station. Therefore, not only user terminals in connected mode but also the switched user terminals participate in performing measurements regarding the cell in which these user terminals are located. Different measurements may be performed. For example, the user terminals measure cell coverage and cell quality, e.g. in terms of signal strength. The acquired measurement results are then reported to the serving base station. Thus, compared to conventional procedures a serving base station can acquire more information regarding its own cell(s) because the base station receives more measurement reports from different user terminals. Said intra-cell information is very valuable for network operators because usually drive tests are performed to acquire intra-cell information. Since according to the present invention a high amount of intra-cell data can be acquired and collected by the respective base stations, network operators can query said data from the base station via the operation support network. Thus, costly and time-consuming drive test are avoided.

According to a further aspect the present invention relates to a computer program product for automatically updating a neighbour relation table of a base station, the computer program product comprising a computer readable medium, having thereon computer program code means, when said program is loaded, to make a computer executable for carrying out the method described above.

According to a still further aspect the present invention relates to a radio communication system comprising at least one user terminal and at least one base station as described above.

According to a preferred embodiment of the invention the radio communication system is an evolved UTRAN (E-UTRAN) system (3GPP LTE System), the user terminal is an user equipment (UE), the base station is an E-UTRAN NodeB, and the broadcast message is a System Information Block Type 1 (SIB1). The System Information Block Type 1 contains information relevant when evaluating whether a UE is allowed to access a cell and defines the scheduling of other system information. The switching instruction according to the present invention is inserted into the SIB1 by using a separate new field or even simpler by enhancing an already existing field. In the latter case, for example, the "cellBarred" field of the "cellAccessRelatedlnformation" is enhanced by the entry "notldle".

However, it should be noted that the present invention is not limited to an E-UTRAN system but is also applicable, for example, to a WiMAX system or an UMTS system.

These and other aspects of the present invention will be apparent from and elucidated with reference to the embodiments thereafter. It should be noted that the use of reference signs shall not be construed as limiting the scope of the invention.

### Brief description of the drawings

- Figure 1: shows schematically an exemplary radio communication system, comprising two base stations and one user terminal; and
- Figure 2: shows a flow chart of a preferred embodiment of the updating method according to the present invention.

### Detailed description of the drawings

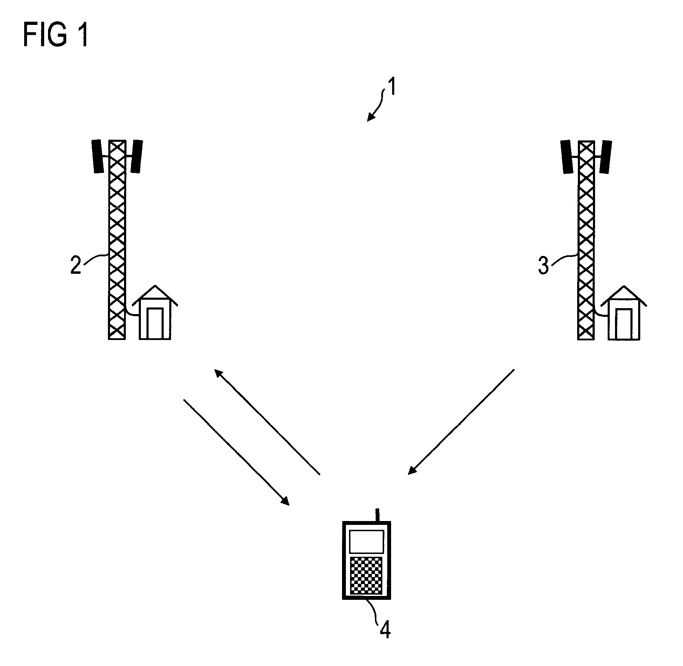

Figure 1 shows schematically an exemplary radio communication system 1, comprising two base stations 2, 3 and one user terminal 4. One of said base stations is a serving base station 2 for the user terminal 4. That is, the user terminal 4 is located within a cell of the serving base station 2 and periodically decodes a broadcast channel thereof.

According to an embodiment of the present invention the radio communication system 1 of figure 1 is a LTE system. Therefore, in the following the base stations 2, 3 are referred to as eNBs (E-UTRAN NodeB) and the user terminal 4 is referred to as UE (user equipment). The serving eNB 2 broadcasts a broadcast message including an instruction for switching the UE 4 from idle mode to not idle mode in case that the UE 4 is in idle mode. In case of the LTE system of figure 1 the broadcast message including such switching instruction for UEs in idle mode is the System Information Block Type 1 message. The UE 4 switched to not idle mode is used for reporting measurements regarding the neighbouring eNB 3, more precisely regarding the neighbouring cell of the cell in which the UE 4 is located and which is a cell of the neighbouring eNB 3. Such measurement report contains for example the PCI of the neighbouring cell. Based on this information the serving eNB 2 can request the UE 4 to acquire more data regarding the neighbouring eNB 3 by reading out its broadcast channel. This procedure is known to the skilled person and is not further detailed. The information acquired by the serving eNB 2 by means of the measurement reports from the UE 4 is used to fill and/or update a NRT of the serving eNB2.

In Figure 1, the communication directions between the UE and the eNBs are shown by arrows. The communication between the serving eNB 2 and the UE 4 is bidirectional, since the UE 4 reads out the broadcast channel of the serving eNB 2 and sends measurement reports regarding the neighbouring eNB 3 back to the serving eNB 2. In contrast, the communication between the neighbouring eNB 3 and the user UE 4 is unidirectional because the UE 4 only measures the signal quality and may be instructed to read out the broadcast channel of the neighbouring eNB 3.

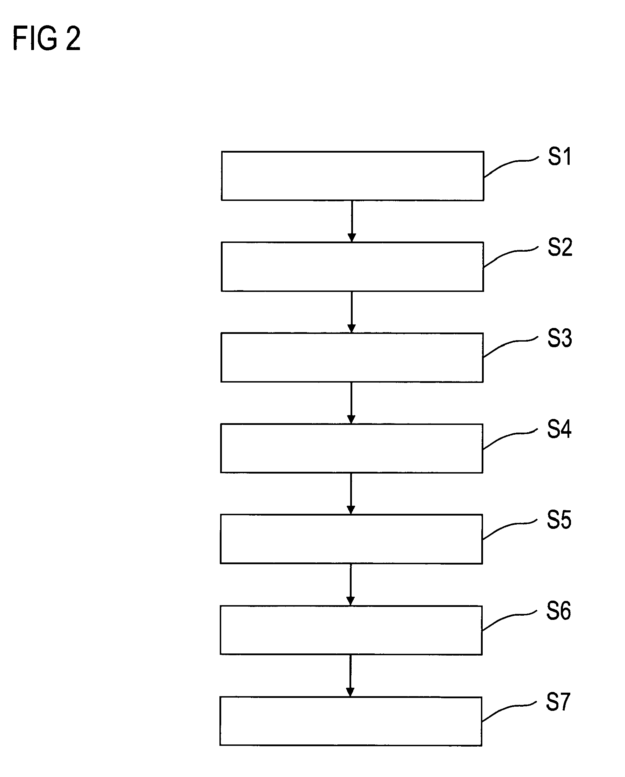

Figure 2 shows a flow chart of a preferred embodiment of the updating method according to the present invention. In a first step S1 an instruction for switching user terminals in idle mode to a not idle mode is inserted into a broadcast message. In a second step S2 the broadcast message extended by the switching instruction is broadcasted from a base station to user terminals served by said base station. In a third step S3 user terminals in idle mode receiving said extended broadcast message are switched to the not idle mode. In a fourth step S4 a user terminal switched from the idle mode to the not idle mode performs measurements regarding neighbouring cells of a cell in which said user terminal is located. In a fifth step S5 a user terminal performing such measurement requests grant for uplink resources to its serving base station to send a measurement report. In a sixth step S6 a neighbour relation table of the serving base station is automatically updated based on the measurement report transmitted from the user terminal served by the base station broadcasting the extended message and switched from idle mode to not idle mode. In a seventh step S7 the switched user terminal is released from the not idle mode after a predefined period.

## Claims

1. A method for automatically updating a neighbour relation table of a base station, comprising:
- broadcasting (S2) a broadcast message from the base station (2) to user terminals (4) served by said base station (2);
**characterized by**
- inserting (S1 ) an instruction into the broadcast message for switching user terminals in idle mode to a not idle mode; and
- switching (S3) user terminals in idle mode receiving said broadcast message to the not idle mode.

2. Method according to claim 1, wherein a user terminal (4) switched to the not idle mode performs measurements (S4) regarding neighbouring cells of a cell in which said user terminal (4) is located.

3. Method according to claim 2, wherein the user terminal (4) switched to the not idle mode requests (S5) grant for uplink resources to its serving base station (2).

4. Method according to claim 3, further comprising the step of automatically updating (S6) the neighbour relation table of the base station (2) based on measurement reports transmitted from user terminals (4) switched to the not idle mode to the base station (2).

5. Method according to any of the preceding claims, further comprising the step of releasing (S7) a switched user terminal (4) from the not idle mode after a predefined period.

6. Computer program product for automatically updating a neighbour relation table of a base station (2), the computer program product comprising a computer readable medium, having thereon computer program code means, when said program is loaded, to make a computer executable for carrying out the method according to any of the preceding claims.

7. User terminal (4) for automatically updating a neighbour relation table of its serving base station (2), comprising:
- receiving means for receiving a broadcast message from the serving base station (2);
- extracting means for extracting an instruction inserted into the broadcast message for switching user terminals in idle mode to a not idle mode; and
- switching means for switching to the not idle mode, if said user terminal (4) is in the idle mode.

8. User terminal (4) according to claim 7, further comprising measuring means for performing measurements regarding neighbouring cells of a cell of the base station (2) in which said user terminal (4) is located.

9. User terminal (4) according to claim 8, further comprising requesting means for requesting grant for uplink resources to its serving base station (2), if the user terminal (4) is switched to the not idle mode.

10. Base station (2) having a certain number of cells and at least one antenna element for each cell, comprising:
- broadcasting means for broadcasting a broadcast message to user terminals (4) served by the base station (2);
- inserting means for inserting an instruction into the broadcast message for switching user terminals in idle mode to a not idle mode;
- receiving means for receiving measurement reports from served user terminals (4) switched from idle mode to not idle mode; and
- updating means for automatically updating a neighbour relation table of the base station (2) based on the received measurement reports.

11. Radio communication system (1), comprising at least one user terminal (4) according to any of claims 7 to 9 and at least one base station (2) according to claim 10.

12. Radio communication system (1) according to claim 11, which is an evolved UTRAN (E-UTRAN) system, wherein the user terminals (4) are user equipments (UE), the base stations (2, 3) are E-UTRAN NodeBs (eNB), and the broadcast message is a System Information Block Type 1 (SIB1).

## Amended claims

### Amended claims in accordance with Rule 137(2) EPC.

**1.** A method for automatically updating a neighbour relation table of a base station, comprising:
- broadcasting (S2) a broadcast message from the base station (2) to user terminals (4) served by said base station (2);
- inserting (S1) an instruction into the broadcast message for switching user terminals in idle mode to a not idle mode;- switching (S3) user terminals in idle mode receiving said broadcast message to the not idle mode;
**characterized by**
- performing measurements (S4) regarding neighbouring cells of a cell in which a user terminal (4) is located by said user terminal switched to the not idle mode
- requesting grant (S5) for uplink resources to the serving base station (2) by said user terminal (4); and
- automatically updating (S6) the neighbour relation table of the base station (2) based on measurement reports transmitted from user terminals (4) switched to the not idle mode to the base station (2).

**2.** Method according to claim 1, further comprising the step of releasing (S7) a switched user terminal (4) from the not idle mode after a predefined period.

**3.** Computer program product for automatically updating a neighbour relation table of a base station (2), the computer program product comprising a computer readable medium, having thereon computer program code means, when said program is loaded, to make a computer executable for carrying out the method according to any of the preceding claims.

**4.** User terminal (4) for automatically updating a neighbour relation table of its serving base station (2), comprising:
- receiving means for receiving a broadcast message from the serving base station (2);
- extracting means for extracting an instruction inserted into the broadcast message for switching user terminals in idle mode to a not idle mode; and
- switching means for switching to the not idle mode, if said user terminal (4) is in the idle mode;
- measuring means for performing measurements regarding neighbouring cells of a cell of the base station (2) in which said user terminal (4) is located
- requesting means for requesting grant for uplink resources to its serving base station (2), if the user terminal (4) is switched to the not idle mode
- updating means for automatically updating the neighbour relation table of the base station (2) based on measurement reports transmitted from user terminals (4) switched to the not idle mode to the base station (2).

**5.** Base station (2) having a certain number of cells and at least one antenna element for each cell, comprising:
- broadcasting means for broadcasting a broadcast message to user terminals (4) served by the base station (2);
- inserting means for inserting an instruction into the broadcast message for switching user terminals in idle mode to a not idle mode;
- receiving means for receiving measurement reports from served user terminals (4) switched from idle mode to not idle mode; and
- updating means for automatically updating a neighbour relation table of the base station (2) based on the received measurement reports.

**6.** Radio communication system (1), comprising at least one user terminal (4) according to claim 4 and at least one base station (2) according to claim 5.

**7.** Radio communication system (1) according to claim 6, which is an evolved UTRAN (E-UTRAN) system, wherein the user terminals (4) are user equipments (UE), the base stations (2, 3) are E-UTRAN NodeBs (eNB), and the broadcast message is a System Information Block Type 1 (SIB1).
